# EUROPÄISCHE PATENTSCHRIFT

(11) **EP 2 947 208 B1**
(45) Veröffentlichungstag und Bekanntmachung des Hinweises auf die Patenterteilung: **19.04.2017**
(21) Anmeldenummer: 13871992.7
(22) Anmeldetag: 21.05.2013
(51) Int. Cl.: E02B 15/04, E02B 15/10, B63B 35/32, F23G 7/05, C02F 1/40

(54) **VORRICHTUNG ZUM ENTFERNEN VON ÖLLACHEN IN GEWÄSSERN**
DEVICE FOR ERADICATING OIL SPILLS IN BODIES OF WATER
PROCÉDÉ POUR LIQUIDER LES MARÉES NOIRES DANS DES PLANS D'EAU

(30) Priorität: 18.01.2013 KZ 20130048
(43) Veröffentlichungstag der Anmeldung: 25.11.2015
(73) Patentinhaber: Nurtayeva, Aliya, Almaty 050059 (KZ); Priimak, Danko, Almaty 050032 (KZ); Nurtayeva, Gulnara, Astana 010000 (KZ); Kulekeyev, Zhaxybek, Astana 010000 (KZ)
(72) Erfinder: Nurtayeva, Aliya, Almaty 050059 (KZ); Priimak, Danko, Almaty 050032 (KZ); Nurtayeva, Gulnara, Astana 010000 (KZ); Kulekeyev, Zhaxybek, Astana 010000 (KZ)
(74) Vertreter: Jeck, Anton
(86) Internationale Anmeldenummer: PCT/KZ2013/000007
(87) Internationale Veröffentlichungsnummer: WO 2014/112855

(56) Entgegenhaltungen:
- WO-A1-94/24374
- WO-A1-98/39519
- SU-A3- 1 570 654
- US-A- 4 154 684
- US-A- 4 645 376

## Beschreibung

Die Erfindung betrifft eine Einrichtung zur Bekämpfung von Ölverschmutzungen auf Wasserflächen nach dem Oberbegriff des Anspruchs 1.

Die vorliegende Erfindung betrifft Umweltprobleme in der Erdölgewinnungsindustrie, den Umweltschutz und insbesondere ein Verfahren und Einrichtungen zur Bekämpfung (Beseitigung) von Ölverschmutzungen in Wasserbecken. Die Erfindung kann bei der Bekämpfung von Ölverschmutzungen, Ölpest, Verunreinigung von Wasserflächen durch Ölprodukte und andere hydrophobe brennbare Flüssigkeiten verwendet werden.

In letzter Zeit wird weltweit immer mehr Aufmerksamkeit auf Verfahren zur Bekämpfung der Auswirkungen von Ölverschmutzungen infolge Havarien gelenkt. Aufgrund der Erschöpfung von nichterneuerbaren Energien, darunter auch Erdöl, nimmt der Anteil an marinen im Abbau stehenden Lagerstätten zu. Ihre Ausbeutung und ihr Abbau stellen höhere Ansprüche an das eingesetzte technische Verfahren, die Anlagentechnik und die Sicherheit des Erdölgewinnungsvorgangs. Die Havarie auf der C5lbohrplattform Deepwater Horizon im Golf von Mexiko im April 2010 und die nachfolgende Ölverschmutzung waren die größte technische Katastrophe hinsichtlich der nachteiligen Konsequenzen für die Umweltsituation. Die Lehre aus dieser Tragödie ist für Kasachstan im Hintergrund des Abbaus von Kashagan wichtig. Kashagan ist die größte Erdöllagerstätte in Kasachstan, deren Abbaufristen auf die Jahre 2014 - 2015 verlagert worden sind. Zugleich diente die Havarie im Golf von Mexiko als Anstoß für eine weitere Abwicklung im Bereich Forschung und Entwicklung neuer Verfahren zur Bekämpfung der Auswirkungen von Ölverschmutzungen. Zur Zeit werden folgende Verfahren angewendet: Schwimmsperren, Dispergierungsmittelverteilung, Anwendung von Sorptionsmitteln, kontrollierte Verbrennung des Öls, Separation und mechanisches Abschöpfen/Skimming.

Eine große Gruppe von Verfahren zur Ölentfernung von der Wasseroberfläche beruht auf einer Ölabscheidung aus dem ölverunreinigten Wasser, wobei Wasser und Öl getrennt werden. Diese Abscheidung erfolgt durch schwerkraftbedingte Trägheits- und schwerkraftbedingte Zentrifugalkräfte, wobei verschiedene Konstruktionen angewendet werden. Aus dem Stand der Technik ist z. B. eine Einrichtung zur Wasserentölung [Patent RU 2054090, IPC E02B 15/04; veröffentl. 10.02.1996] bekannt. Die Wirkungsweise dieser Einrichtung ist einem Abscheider ähnlich. Hier wird ein rotierender Filtereinsatz aus einem Schwammkunststoff (porösen Werkstoff) verwendet. Die Ölabscheidung aus dem Wasser wird durch eine Veränderung der Filterdrehgeschwindigkeit erreicht.

Dieser Gruppe von Verfahren sind folgende gemeinsame Mängel eigen:
1. Diskontinuität des Vorgangs, fehlende Kontinuität und folglich niedriger Nutzeffekt, lange Dauer,
2. begrenzte Anwendbarkeit, die dadurch bedingt ist, dass die ganze Menge des verunreinigten Wassers durch die genannte Einrichtung passieren muss. Aus diesem Grund ist dieses Verfahren unmittelbar an der Ölverschmutzungsstelle, z. B. in offenen Gewässern, nicht immer anwendbar.

Einer weiteren Gruppe von Verfahren liegt eine physikalische Absorption zugrunde. Aus dem Stand der Technik sind ein Verfahren und eine Einrichtung zur Ölbekämpfung und -regeneration an den Ölverschmutzungsstellen auf Wasserflächen bekannt [Patent US 4366067, IPC C02F 1/28; veröffentl. 28.12.1982]. Dieses Patent offenbart eine Anwendung eines zerkleinerten schaumartigen synthetischen Polyisozyanurat-Absorptionsmittels. Dieses Absorptionsmittel wird in Säcke oder Schwimmsperren gefüllt, die aus einem porigen Werkstoff gefertigt sind. Nach der Reinigung der Wasseroberfläche werden die Säcke mit dem aufgenommenen Öl ausgepresst/ausgewrungen, um das Öl rückzugewinnen.

Mängel dieser Gruppe von Verfahren sind:
1. große Mengen von Absorptionsmitteln, um das verlaufene Öl zu absorbieren,
2. vorausgesetzte Vorbereitung der Absorptionsmittel: Zerkleinerung, Säckeabfüllung,
3. vorausgesetztes Sammeln der Säcke mit dem Absorptionsmittel - unvermeidlicher Arbeits- und Zeitaufwand.
4. Der eingesetzte Ablauf der Ölregenerierung aus dem Absorptionsmittel stellt keine vollständige Ölabscheidung sicher. Demzufolge verliert das Absorptionsmittel sein Aufnahmevermögen im Zuge seiner Ausnutzung.

Bei einer dritten Gruppe der Verfahren handelt es sich um den Einsatz von Dispergatoren, darunter auch Emulgatoren und grenzflächenaktive Substanzen (GAS). Aus dem Stand der Technik ist eine Zubereitung zur Entölung von Wasseroberfläche bekannt [Patent RU 2051262, IPC E02B 15/04; C02F 1/28; veröffentl. 27.12.1995]. Diese Zubereitung enthält grenzflächenaktive Substanzen, und zwar Holzproduktionsabfälle und Ethanol oder Isopropanol als Lösemittel mit einem Massenanteil zwischen 70 und 94 %. Das genannte Präparat dient als ein Ölsammelmittel. Es verhindert die Ausbreitung des Ölfilms auf dem Wasser, vergrößert die Ölfilmstärke und vermindert die Ölfleckflächen. Das erleichtert die weitere Bekämpfung dieser Ölflecken. Um den Ölteppich von der Wasseroberfläche zu entfernen, wird das offenbarte Präparat am Ölteppichumfang aufgetragen. Danach wird der Ölfilm anhand anderer bekannter Verfahren wie Absorption, mechanische Bekämpfung beseitigt.

Jedoch werden bei diesem bekannten Verfahren Alkohole und unpolare Kohlenwasserstofflösemittel als Lösungsmittel verwendet, deren Giftigkeit noch gefährlicher als die von Erdöl sein kann. Die weiteren Mängel dieses Verfahrens sind eine Mehrstufigkeit des Ablaufs und ein hoher Arbeitsaufwand bei der Bekämpfung der Ölteppiche: eine Vorbereitung des Ölsammelmittels, eine Aufbringung des Ölsammelmittels am Umfang jedes Ölteppichs und eine Bekämpfung des Ölteppichs.

Eines der am meisten naheliegenden Verfahren zur Bekämpfung von Ölverschmutzungen ist eine Ölverbrennung unmittelbar im Wasserbecken an der Verschmutzungsstelle. Obwohl dieses Verfahren sehr einfach ist, wurde es lange Zeit in der Praxis nicht eingesetzt, bis hin zu dem Fall mit dem Öltanker Exxon Valdez, der 1989 vor Alaska auf ein Riff auflief [R.A.Hinrichs, M.Kleinbach. Energy: Its Use and the Environment (2002). Brooks/Cole, Thomson Learning, p.213]. Die damals vorgenommenen Versuche, das Öl an den großflächigen Ölpestflächen zu verbrennen, waren erfolgreich und seither werden verschiedene Abänderungen der Ölverbrennung an den Ölverschmutzungsstellen zum Gegenstand wissenschaftlicher Entwicklungen und finden auch in der Praxis Anwendung.

Die Vorteile der Verbrennung sind eine hohe Ölverschmutzungsbekämpfungsgeschwindigkeit und eine Möglichkeit, die weitere Ausbreitung des Ölfilms über das Wasser zu verhindern. Es kann somit vermieden werden, dass das Öl weit entfernte bzw. empfindliche Zonen erreicht oder sehr große Flächen verunreinigt.

Jedoch ist die Ölverbrennung auf der Wasseroberfläche mit folgenden Schwierigkeiten verbunden:
1. Die breitflächige Verbrennung läuft ungleichmäßig, blitzartig, denn es liegt ein Konkurrenzkampf für den Luftsauerstoff zwischen den einzelnen Brennflecken vor. Aufgrund des Sauerstoffmangels werden beim Brennen beachtliche Mengen an toxischen teilweise verbrannten Partikeln (Teilverbrennungsprodukte) freigesetzt. Sie gelangen in die Luft, stören die Frischluftzufuhr und verlangsamen den Brennvorgang.
2. Mit dem Abbrand von niedrigsiedenden Komponenten, die als erste ausbrennen (oder bei gealterten Ölverschmutzungen als erste verdunsten), wird das Brennen unstabil, wobei die Verbrennungsfronten langsam zum Erlöschen neigen.
3. Bei niedrigen Wassertemperaturen ist die Ölanzündung erschwert, da die Verbrennung unbeständig erfolgt.
4. Wenn die Ölschicht bis zu einer Stärke von 2 Millimetern ausbrennt, hört die Ölbrennung sowohl aufgrund der verminderten Menge an niedrigsiedenden Komponenten als auch infolge der Wärmeabgabe an der brennenden Oberfläche an dem Wasser auf. Die Menge der an das Wasser abgegebenen Wärme steigt mit der Verdünnung des Ölfilms.

Aus diesen Gründen sind die Versuche einer direkten Ölverbrennung auf einer Wasseroberfläche wenig erfolgreich.

Es gibt eine Reihe von Patentschriften, die die Förderung (Stimulation) sowie die Erleichterung des Verbrennungsvorgangs und Einrichtungen hierfür offenbaren. Diese bekannten Verfahren und Einrichtungen sind darauf abgezielt, einige der oben genannten Mängel zu überwinden.

Eine der Abänderungen zur Verbrennung von Ölverschmutzungen offenbart das Verfahren zur Entfernung von Ölprodukten von der Wasserbeckenoberfläche [Patent RU 2049201, IPC E02B 15/04; veröffentl. 27.11.1995]. Um eine Brenneffizienz sicherzustellen, werden bei diesem Verfahren Schwimmsperren verwendet. Diese begrenzen die Ölflecken und die Luftzufuhr unter den Wasserspiegel. Die Luft durchsprudelt den Ölfilm und sättigt ihn mit Sauerstoff. Das sorgt für eine Erhöhung der Vollständigkeit der Ölverbrennung auf dem Wasser und für eine Ununterbrochenheit des Brennvorgangs.

Das Verfahren ist nur begrenzt anwendbar, und zwar an den für Schiffe befahrbaren Flächen. Darüber hinaus setzt die Luftzufuhr die Verwendung einer speziellen Anlagentechnik voraus, und zwar von einem verzweigten gelochten Rohrleitungsnetz, welches unmittelbar unter jedem Ölfleck aufgebaut werden muss. Dies ist aber bei größeren Ölverschmutzungen schwer realisierbar.

Der nächstkommende Stand der Technik gegenüber der erfindungsgemäßen Einrichtung zur Bekämpfung von Ölverschmutzungen ihrem technischen Wesen nach ist eine Einrichtung zur Bekämpfung von Ölverschmutzungen auf Wasser [Patent US 3659715, IPC C02B 9/02; veröffentl. 2.05.1972]. Bei dieser Einrichtung handelt es sich um einen verlängerten porigen hydrophoben (oleophilen) Körper, dessen Unterteil sich nach unten ins Wasser erstreckt und dessen Oberteil über die flüssige Schicht hervorragt. Der porige Körper ist in Form eines verlängerten nach oben zugespitzten Stabs, der seine aufrechte, teilweise ins Wasser eingetauchte Stellung im Wasser dank dem Ballast (einem Gewicht) aufrechterhält, und als ein Schwimmer ausgebildet. Der Ballast ist am unteren Teil des Stabs befestigt. Der Schwimmer befindet sich am oberen Teil des Stabs. Der Stab ist aus einem hydrophoben (oleophilen) Material gefertigt, das jedoch weniger als Öl und bevorzugt weniger als Kohlenstoff brennbar ist. Wenn dieser Körper ins Wasser mit der darauf schwimmenden brennbaren Flüssigkeit (Öl) eingetaucht wird, so füllt diese Flüssigkeit die Poren des Stabs aus, so dass der Stab praktisch als ein Docht (Zündschnur) wirkt. Die mit Öl durchtränkte Stabspitze wird angezündet. Die entstehende Flamme wird danach durch die brennbare Flüssigkeit (Öl) nachgespeist, die sich aus der Flüssigkeitsschicht über den genannten porigen Stab nach oben unter der Wirkung von Kapillarkräften bewegt. Auf diese Weise erfolgt die Ölbekämpfung mittels der Ölverbrennung auf der Wasseroberfläche.

Die beschriebene Einrichtung hat folgende Mängel:
1. eine unzureichende Vollständigkeit der Bekämpfung der Ölverschmutzung auf dem Wasser. Das liegt daran, dass der porige als ein Docht wirkende Kohlenstoffstab nur für Leichtöle effizient sein kann, die dazu fähig sind, absorbiert zu werden und über den Stab hochzukommen. Die bitumenartigen Öle dagegen können aufgrund beachtlicher Dichte und Viskosität über die Kapillare nicht nach oben gehen und bleiben auf dem Wasser unverbrannt zurück. Folglich wird mit der Ölverbrennung an der Verunreinigungsstelle eine Verdünnung (bis zu 1 - 2 mm) und eine Erhärtung des Ölfilms beobachtet, der dann über den Docht nicht mehr hochkommen kann. Diese Erdölfraktion wird unmittelbar auf dem Wasser nicht brennen, denn der Wärmeaustausch mit dem Wasser bei einer geringen Filmdicke erreicht beachtliche Werte. Folglich wird die Filmtemperatur unter die Brenntemperatur sinken. Darüber hinaus werden die kapillarartigen Poren des Dochts durch Schweröle und Verbrennungsrückstände, darunter auch durch Feststoffe, verstopft. Das vermindert den Nutzeffekt des Vorgangs und setzt einen periodischen Dochtwechsel voraus.
2. Die beschriebene Einrichtung kann in einem aussetzenden Betrieb wirken: Mit der Ölverbrennung wird das Absorptionsvermögen nachlassen, so dass die Einrichtung ab und zu gewechselt werden muss.

WO-A1-94/24374 weist die Merkmale des Oberbegriffs des Anspruch 1 auf.

Es ist Aufgabe der Erfindung, eine Einrichtung zu entwickeln, bei der die Effizienz der Bekämpfung von Ölverschmutzungen auf der Wasseroberfläche mittels Verbrennung gesteigert ist.

Der technische Effekt ist eine vollständigere Verbrennung des auf der Wasseroberfläche schwimmenden Wasserfilms.

Die gestellte Aufgabe wird durch die Merkmale des Anspruchs 1 gelöst.

Die Einrichtung besteht aus einem oleophilen teilweise im Wasser eingetauchten Körper, einem Schwimmer und einem Ballast. Im Unterschied zum Stand der Technik weist die Einrichtung zusätzlich erfindungsgemäß ein Antriebswerk auf, dessen Welle mit dem oleophilen Körper verbunden ist. Der oleophile Körper ist dabei in Form eines Zylinders aus einem hitzefesten Material, z B. Keramik oder Metallnetz, ausgebildet.

Die erfindungsgemäße Einrichtung trennt den Ölfilm vom Wasser ab, hebt ihn und zündet ihn an. Dabei wird die Zufuhr von Frischluft an den Ölfilm sichergestellt, und die Wärmeabgabe an das Wasser wird minimiert. Dadurch wird das Brennen vollständiger und störungsfrei.

Ausführungsbeispiele der Erfindung sind den Zeichnungen zu entnehmen. Es zeigen:

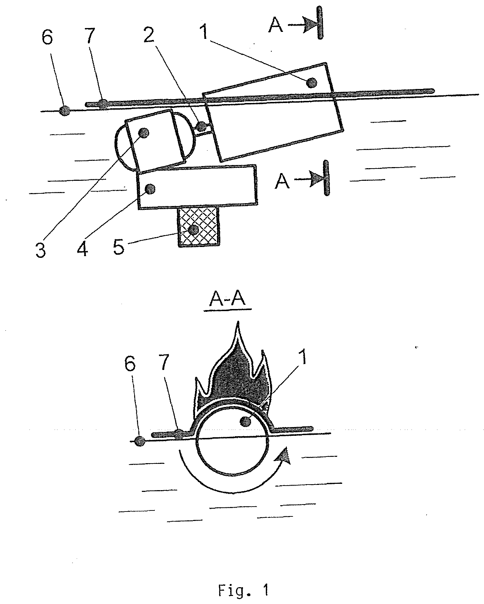

Fig. 1 die schematische Darstellung der Einrichtung zur Bekämpfung von Ölverschmutzungen auf Wasserflächen und

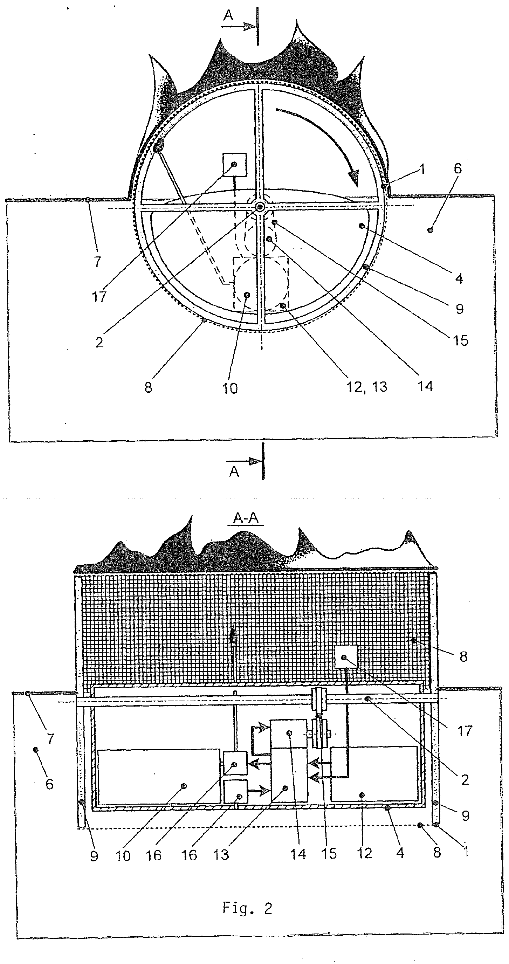

Fig. 2 eine mögliche Ausgestaltung der erfindungsgemäßen Einrichtung.

Ein oleophiler Körper 1 ist an einer Welle 2 eines Antriebswerks 3 befestigt. Ein Schwimmer 4 und ein Ballast 5 stabilisieren die Stellung der Einrichtung, so dass ein Teil des Körpers 1 über einer mit einem Ölfilm 7 bedeckten Wasseroberfläche 6 hervorragt. Bei der Rotation des Körpers 1 geht der am Körper anhaftende Ölfilm 7 über die Wasseroberfläche 6 hinauf und wird angezündet. Dabei wird ein ununterbrochenes Brennen aufrechterhalten, denn der Ölfilm 7 im Brennbereich wird durch die Rotation des Körpers 1 ständig erneuert.

Der Körper 1 ist in Form eines Zylinders aus einem hitzefesten Metallnetz 8 ausgebildet und an der Welle 2 befestigt. Das Metallnetz 8 ist an Felgen 9 aufgespannt. Die Welle 2 dreht sich frei in Dichtungen an den Wänden des wasserdichten Schwimmers 4. Das Antriebswerk 3 umfasst Folgendes: Auf dem Boden des Schwimmers 4 sind eine Gasflasche 10 mit einem selbstzündbaren Gas, z. B. Silan (Siliziumwasserstoff) S1 H4, ein elektromagnetisches Ventil, eine elektrische Batterie 12, eine Elektronikeinheit 13, ein E-Motor 14 und ein Getriebe 15 angeordnet. Deren Gesamtmasse hat die Funktion eines stabilisierenden Ballasts. Am Eingang der elektronischen Einheit 13 sind ein Druckmessgeber 16, der über eine Öffnung im Boden des Schwimmers 4 mit Wasser kommuniziert, und ein Flammenstrahlungsgeber 17 angeschlossen, der an der oberen Wand des Schwimmers 4 befestigt ist.

Wenn die Einrichtung ins Wasser 6 eingetaucht wird, sendet der Druckmessgeber 16 ein Signal an die Elektronikeinheit 13, die den E-Motor 14 an die Batterie 12 anschließt. Das Drehmoment des E-Motors 14 wird über das Getriebe 15 an die Welle 2, die Felgen 9, das Metallnetz 8 übertragen. Der Körper 1 wird angetrieben. Nach Ablauf einer Zeit, die wissentlich dafür ausreicht, um den angehafteten Ölfilm 7 auf die in Bezug auf das Wasser äußere Körperoberfläche hinauszutragen, sendet die Elektronikeinheit 13 ein Kurzsignal an das elektromagnetische Ventil Eine Ladung (Portion) des selbstzündbaren Gases fließt aus der Gasflasche 10 zum Metallnetz 8 und zündet den Ölfilm 7 an. Der Flammenstrahlungsgeber 17 sendet ein Verbotssignal an die Elektronikeinheit 13, um die Zufuhr des selbstzündbaren Gases zu verhindern. Wenn das Brennen des Ölfilms 7 am Metallnetz 8 möglicherweise aufhört, wiederholt die Elektronikeinheit 13 den Zündungsablauf: "Verzögerungszeit, kurzzeitige Zufuhr des selbstzündbaren Gases", bis ein Signal vom Flammenstrahlungsgeber 17 kommt.

Die Rotation des Körpers 1 erneuert nicht nur den Ölfilm 7 auf dem Metallnetz 8, sondern verursacht auch eine fortschreitende Bewegung der gesamten Einrichtung über dem Wasserbecken. Das trägt zur vollständigeren Ölverbrennung bei, denn der erhärtende Ölfilm 7 ist nur eingeschränkt beweglich und kann von selbst an das Metallnetz 8 kommen.

Die genannte Einrichtung stellt einen höheren Reinigungsgrad des Wasserbeckens und eine Entfernung des auf dem Wasser schwimmenden Ölfilms aufgrund folgender Faktoren sicher:
1. vollständigere Ölverbrennung dadurch, dass der ganze Ölfilm 7 hochgeht, wobei der Ölfilm 7 sowohl Leicht- als auch Schweröle aufweist, im Unterschied zum Prototyp, bei dem bitumenartige Schweröle auf dem Wasser zurückbleiben, denn sie sind nicht imstande, über den porigen Körper 1 hochzukommen, nur Leichtöle sind dazu fähig.
2. Die Rotation des Körpers 1 trägt zur vollständigeren Verbrennung dadurch bei, dass die frische Luft den Film erreichen kann.
3. die ununterbrochene Erneuerung des Ölfilms 7 durch die Rotation des oleophilen Körpers 1, der sich nicht nur dreht, sondern auch eine fortschreitende Bewegung der Einrichtung über das Wasserbecken sicherstellt und folglich für eine breitere Abdeckung der Wasseroberfläche sorgt.

## Patentansprüche

1. Einrichtung zur Bekämpfung von Ölverschmutzungen auf Wasserflächen, die aus einem oleophilen teilweise im Wasser eingetauchten Körper (1), einem Schwimmer (4), einem Ballast (5) und einem Antriebswerk (3), dessen Welle (2) mit dem oleophilen Körper (1) verbunden ist, besteht,
**dadurch gekennzeichnet,**
**dass** sie zusätzlich eine Ölfilmzündvorrichtung enthält, um den an der Oberfläche des oleophilen Körpers (1) haftenden Ölfilm anzuzünden.

2. Einrichtung nach Anspruch 1,
**dadurch gekennzeichnet,**
**dass** der Körper (1) aus einem hitzefesten Material in Form eines Zylinders ausgebildet ist.

3. Einrichtung nach Anspruch 1,
**dadurch gekennzeichnet,**
**dass** die Ölfilmzündvorrichtung eine Gasflasche (10) mit einem selbstzündbaren Gas, einem Ventil, einer Elektronikeinheit (13) und einem Flammenstrahlungsgeber (17) aufweist, wobei das selbstzündbare Gas über das durch die Elektronikeinheit (13) gesteuerten Ventil an die mit einem Ölfilm (7) bedeckte Oberfläche des oleophilen Körpers (1) gefördert wird, wenn kein Signal vom Flammenstrahlungsgeber (17) anliegt.

4. Einrichtung nach Anspruch 1,
**dadurch gekennzeichnet,**
**dass** sie völlig unterhalb der Wasseroberfläche ist, bis auf den oleophilen Körper (1), der nur teilweise in Wasser eingetaucht ist.

## Claims

1. A device for combating oil contamination on water surfaces, which comprises an oleophilic body (1) partially immersed in water, a float (4), a ballast (5), and a drive mechanism (3) the shaft (2) of which is connected to the oleophilic body (1),
**characterized in that**
it additionally includes an oil film ignition device, in order to ignite the oil film adhering to the surface of the oleophilic body (1).

2. The device of claim 1,
**characterized in that**
the body (1) is embodied of in the form of a cylinder of a heat-proof material.

3. The device of claim 1,
**characterized in that**
the oil film ignition device has a gas bottle (10) with a self-ignitable gas, a valve, an electronic unit (13), and a flame radiation encoder (17), and if no signal from the flame radiation encoder (17) is present, the self-ignitable gas is fed on to the surface, covered with an oil film (7), of the oleophilic body (1) via the valve controlled by the electronic unit (13).

4. The device of claim 1,
**characterized in that**
it is completely under the surface of the water, except for the oleophilic body (1), which is immersed only partially in water.

## Revendications

1. Dispositif pour combattre la pollution par les hydrocarbures des surfaces d'eau composé d'un corps oléophile (1) partiellement immergé dans l'eau, d'un flotteur (4), d'un lest (5) et d'un propulseur (3) dont la vague (2) est reliée au corps oléophile (1)
Est caractérisé de sorte qu'il contient complémentairement un dispositif d'allumage d'un film d'huile pour allumer le filme d'huile adhérent sur la surface du corps oléophile (1).

2. Dispositif selon revendication 1 est caractérisé de sorte que le corps (1) est formé de matériel étanche sous forme de cylindre.

3. Dispositif selon revendication 1 est caractérisé de sorte que le dispositif d'allumage du film d'huile présente une bouteille de gaz (10) avec du gaz auto-inflammable, une soupape, une unité électronique (13), un capteur de rayonnement de flammes (17) et un détecteur de rayonnement, où le gaz auto-inflammable est éconduit via une soupape selon un programme respectif (11) par une unité électronique (13) sur la surface couverte d'un filme d'huile (7) du corps oléophile (1) si aucun signale ne sort du capteur de rayonnement de flammes (17) et du détecteur de rayonnement.

4. Dispositif selon revendication 1 est caractérisé de sorte qu'il se situe complètement en dessous de la surface d'eau, excepté du corps oléophile (1) immergé en partie dans l'eau.
